(19) Europäisches Patentamt
European Patent Office
Office européen des brevets

(11) EP 1 826 796 A1

(12) EUROPEAN PATENT APPLICATION
published in accordance with Art. 158(3) EPC

(43) Date of publication:
29.08.2007 Bulletin 2007/35

(21) Application number: 03789660.2

(22) Date of filing: 11.07.2003

(51) Int Cl.:
*H01J 1/30* *(2006.01)* *H01J 9/12* *(2006.01)*
*H01J 19/24* *(2006.01)*

(86) International application number:
PCT/RU2003/000303

(87) International publication number:
WO 2005/006378 (20.01.2005 Gazette 2005/03)

(84) Designated Contracting States:
AT BE BG CH CY CZ DE DK EE ES FI FR GB GR HU IE IT LI LU MC NL PT RO SE SI SK TR

(71) Applicant: Tetranova Ltd.
Wicklow,
Co. Wicklow (IE)

(72) Inventors:
- GUSEVA, Malvina Borisovna
Moscow, 117280 (RU)
- BABAEV, Vladimir Georgievich
Moscow, 119180 (RU)
- NOVIKOV, Nikolay Dmitrievich
Cheboksary, 428035 (RU)
- SAVCHENKO, Natalya Fedorovna
Moskovskaya obl., 141070 (RU)
- KHVOSTOV, Valeriy Vladimirovich
Moskovskaya obl., 141018 (RU)
- FLOOD, Patrick, O.
Wicklow,
o. Wicklow (IE)

(74) Representative: Gates, Marie Christina Esther et al
Tomkins & Co.
5 Dartmouth Road
Dublin 6 (IE)

# (54) COLD CATHODES MADE OF CARBON MATERIALS

(57) The invention relates to the field of electronics, and in particular to the creation of autoemission cathodes. Cold cathodes are intended for use as an electrode source in various electrovacuum devices. One direction in the development of cold cathodes is research into the possibilities of using different materials for their manufacture. These include a hydrocarbon material based on linear-chain $sp^1$ carbon. Carbon fibre or carbon film based on linear chain $sp^1$ carbon, including film formed by applying a suspension of carbon powder to a substrate, can be used as the carbon material. The substrate may be made flexible. In addition, a cathode may be made from carbon film formed by deposition from a carbon plasma. The method for producing carbon fibres comprises performing the reaction of dehydrohalogenation of polymeric fibres made from polyvinylidenehalides or polyvinyhalides with subsequent heat treatment at a temperature of from 400 to 900 C in a vacuum of roughly $10^{-4}$ Pa. Both electronic instruments and also light sources may be manufactured using the cold cathodes now proposed.

EP 1 826 796 A1

## Description

Field

The present invention relates to the field of electronics, and more specifically to the creation of autoemission cathodes.

Autoemission cathodes (also known as cold cathodes or cold emitters) are electron sources, the operating principle of which is based on autoelectron emission, i.e. the tunnelling of electrons under the influence of an external electrical field through the potential barrier at the "solid body-vacuum" interface. Cold cathodes can be employed both in the most varied vacuum electronics instruments, and also in various light sources.

They possess a whole series of advantages over other types of electron sources, such as the absence of incandescence, high emission current density and the steepness of the volt-ampere characteristic, inertia-free nature and resistance to external influences.

Prior art

One trend in the development of cold emitters is research into the possibilities of using different materials for their manufacture, and also the creation of new material, which should possess a specific combination of properties, such as high mechanical strength during operation in a high vacuum, good electrical and thermal conductivity, and also stable electron work function values. The list of materials which have been studied is extremely long: refractory metals (tungsten, molybdenum, rhenium, platinum), transition group metals (chromium, niobium, hafnium), semiconductive materials. For the last 30 years, research has concentrated on carbon materials, films, due to the discovery that these have good emission properties.

Even the first experiments with carbon fibres, used in pointed form (in order to secure high electrical field strength) for a scanning electron microscope (Bacner F. et al. The carbon-fibre field emitter. J. Phys D. Appl. Phys., 1974, v. 7, No. 15, p 2105-2115) gave good results in the conditions of a high technical vacuum. It was later demonstrated that such fibres also provide autoemission without being pointed (Braun E. et al. "Carbon fibres as field emitter, Vacuum, 1975, v. 25, N 9/10, p. 425-426).

Among those carbon fibres investigated as emitters, the best studied are fibres based on PAN - products of the pyrolysis of polymeric polyacrylonitrile fibres and their subsequent high-temperature treatment. The technology for producing such fibres consists of the following operations:

1. Oxidation of PAN-fibre with atmospheric oxygen at a temperature of 200-300°C. In this process, the polymer molecules are converted into six-membered rings, containing carbon and nitrogen, oriented along the bodies of the fibres.
2. Carbonization of the oxidized fibre at a temperature of up to 1000°C in an inert atmosphere.
3. Graphitization in an inert medium at a temperature of up to 3200°C.

As can be seen, the technology for producing fibres with the required emission properties is fairly complex, and moreover it is necessary to ensure high stability of the process conditions, particularly in the oxidation stage.

Another problem involved in the use of carbon fibres as autoemitters is that electrical field strengths of the order of $10^7$ V/cm are required in order to obtain emission currents which are sufficiently high for practical purpqses.

Film structures are of great practical interest in relation to emission properties.

This is explained by the possibilities of manufacturing cold cathodes with developed surfaces. Existing technologies for the deposition of films onto a substrate surface permit selective deposition on isolated areas of the substrate, which makes it possible to manufacture emission sources with controllable geometry.

The best results when studying emission properties were obtained for diamond-like films and films on carbon nanotubes. In regard to technology, the latter are the most promising, since they can be applied to a substrate in the simplest possible manner - by attaching previously prepared and crushed nanotubes with the aid of a binder. The paper by Chung D.S. et al., Field emission from well distributed Multiwall carbon nanotube films Techndiqest JVMC. - Darmstadt, Germany, 1999, p. 312-313, describes the application of crushed nanotubes to an autocathode substrate by printing.

At the same time, regarding emission properties, E.P. Sheshin, in "The surface structure and autoemission properties of carbon materials", Moscow, Fizmatkniga, 2001, pp. 209-210, states "virtually all estimates of electron work function for diamond-like films and nanotubes .... lead to a very low value of this". One explanation of the reason for this, which is given in the cited work, is that in order to obtain an ideal emitting surface it is necessary that the nanotubes should be aligned perpendicularly to the substrate surface, which can be achieved only in relation to a certain number of nanotubes. Attempts to increase the number of emission centres by means of a high density of nanotubes have not given positive results, which may be explained by mutual screening of the electrical field with too great a number of

nanotubes.

Thus, despite numerous investigations into various types of carbon materials, both in the form of fibres and in the form of films. The task remains urgent of producing a material which simultaneously possesses both good technological capabilities allowing the manufacture of electron emission sources from it, and also improved emission properties.

Substance of the invention

The fundamental object of the present invention is to find new carbon materials which possess improved properties, suitable for the manufacture of cold cathodes.

Another object of the invention is to create cold cathodes which possess improved emission properties, in particular ensuring that emission currents of significant value are obtained at lower electrical field strength.

A further object of the invention is to create a technology for the production of materials for the manufacture of cold cathodes, which can be implemented without the use of complex and expensive equipment.

The above-mentioned and other objects, set out hereafter in the specification, are achieved by the present invention.

It is based on the discovery by the inventors that the new carbon material based on $sp^1$-carbon which they have developed, and which has been named "Tetracarbon", has excellent emission properties, and specifically that electron emission from the surface of this material occurs at an electrical field strength 1-2 orders of magnitude lower than for other materials used for the manufacture of cold cathodes.

This property of said material is realized in different, fibre and film, types of cold cathodes.

Another aspect of the present invention is the creation of a reasonably simple technology for the manufacture of both fibre and film emitters. The technology for the manufacture of carbon fibres possessing said emission properties is based on the reaction of dehydrohalogenation of polymeric fibres made of polyvinylidenehalides or polyvinylhalides with subsequent high-temperature treatment of the fibres at temperatures of from 400 to 900°C in a vacuum of roughly $10^{-4}$ Pa.

For the manufacture of film emitters, a technology is proposed which comprises the application of a suspension of Tetracarbon powder to a substrate. So simple a technology makes it possible to manufacture emitters with any required area with minimal expenditure of money and time. The use in this process of a flexible, resiliently deformable substrate makes it possible to transform a film cathode (for example, to form it into a roll) during manufacture or on completion of this.

Film emitters in accordance with the invention may also be manufactured by known methods, in particular by the method described in WO 97/25028 for deposition on a substrate of a plasma stream containing $sp^1$-carbon, in vacuum.

Another aspect of the invention is the creation of various electronic instruments with cold cathodes, in which the cathodes are manufactured from fibres or films produced by the methods indicated above.

A yet further aspect of the invention is the creation of a light source with a fibre cold cathode, manufactured in accordance with the technology described above.

Examples of performance of the invention

The new carbon material Tetracarbon has been disclosed, in particular, in international application PCT/IB96/01487 (WO 97/25078) and US patents No. 6355350 B1 and No. 6454797 B2, included in the present specification as citations. Figure 1 shows the structure of this material, consisting of densely packed linear chains of $sp^1$-carbon (carbyne). The distance between adjacent carbon atoms in Tetracarbon is approximately 1.3 A, while the distance between chains is 4.80-5.03 A. In a film, the carbon chains of Tetracarbon are oriented perpendicularly relative to the film surface. The Raman spectrum of Tetracarbon contains two characteristic regions of linear carbon frequencies (at 2000-2500 $cm^{-1}$ and close to 1540 $cm^{-1}$)

The invention is further described with reference to the drawings, which show:

fig. 1 - the structure of tetracarbon,

fig. 2 - the IR spectra of the initial fibre and the fibre after dehydrohalogenation,

fig. 3 - the IR spectrum of the fibre after high-temperature treatment,

fig. 4 and 5 - the Raman spectra of fibres,

fig. 6 - the results of electron spectroscopy of fibres for chemical analysis,

fig. 7 - the volt-ampere characteristic of a fibre emitter manufactured in accordance with the invention, and a known emitter manufactured from nanostructures,

fig. 8 - an illustration of the emission mechanism using the Schottky model,

fig. 9 and 10 - the volt-ampere characteristic of a film emitter manufactured in accordance with the invention.

a) Manufacture of carbon fibres from Tetracarbon

Industrially produced fibres of polyvinylidenehalides or polyvinylhalides (PVDX/PVX), where X = F, Cl, Br, I or mixtures of these, are used as the starting material for the production of fibres in accordance with the present invention.

Said fibres are subjected to a dehydrohalogenation reaction, in the course of which, in the first stage one halogen atom is removed from each element of the polymer chain and a halogen-substituted polyyne structure is formed. In the second stage, full removal of halogen occurs and a cumulene form of carbon with $sp^1$ bonds between its atoms is formed.

The dehydrohalogenation scheme takes the following form:

$$\text{PVDX} \quad -(CCl_2 - CH_2)_n -$$

$$-(Cl_2\text{-}CH_2)_n\text{-} + 2nKOH \longrightarrow =(C=)_n= + 2H_2O + 2nKCl$$

$$(\text{-}CH_2\text{-}CX_2\text{-})_n \xrightarrow[-\,nHX]{OH^-} (\text{-}CH{=}CX\text{-})_n \xrightarrow[-\,nHX]{OH^-} ({=}C{=}C{=})_n$$

The carbon material obtained by dehydrohalogenation is amorphous, the carbon chains are not oriented relative to one another and there is no order in their mutual position.

In order to improve the atomic structure of the material and to stack the carbon chains in parallel bundles, high-temperature treatment of the dehydrohalogenated material is performed at temperatures from approximately 400°C to approximately 900°C in a vacuum of roughly $10^{-4}$ Pa.

Example 1.

Polyvinylidenechloride yarn produced by the Rhovyl company, with a thread diameter of 10 μm, was used as the starting material.

Dehydrogenation was performed with a solution of KOH in ethyl alcohol 10% + acetone 20%, for one hour at room temperature. The treated threads were washed in alcohol and water, and were then subjected to treatment at 700°C in a vacuum of $10^{-4}$ Pa.

The following were performed in all stages:

- infra-red spectroscopy in the range from 400 to 4000 reciprocal centimetres, using a Perkin Elmer spectrometer,
- Raman spectroscopy with recording of Raman spectra using a Jobin Yvon spectrometer with an emitted light wavelength $\lambda$ = 484.8 nanometres,
- chemical analysis of the composition of the material by electron spectroscopy in an ESCALAB-6 spectrometer.

In addition, images of samples of the fibres obtained were recorded in a YEM-100 electron microscope in phase contrast mode.

Figure 2 shows IR spectra of the initial fibre (1) and fibre after dehydrohalogenation (2), and fig. 3 after heat treatment.

For the initial PVDX fibre, absorption peaks at frequencies of 620, 650 and 720 $cm^{-1}$, corresponding to C-C1 bond vibrations, and at 2850, 2910 and 2980 $cm^{-1}$, corresponding to C-H bond vibrations, are characteristic. Peaks at frequencies of 1100, 1255 and 1430 $cm^{-1}$ correspond to the vibrations of C-H bonds and of C-C'bonds of various types.

After dehydrohalogenation, the absorption peaks corresponding to C-C1 and C-H bond vibrations are substantially reduced. In addition, a wide absorption band appears at 970-1710 $cm^{-1}$ - the C=C double bond, and also a small peak at 2175 $cm^{-1}$, corresponding to the vibrations of the C≡C triple bond ($sp^1$).

Thus, a large part of the chlorine and hydrogen is split off from the polymer during dehydrohalogenation, and the subsequent high-temperature treatment removes them virtually completely.

The Raman spectra (fig. 4 and 5) have three main peaks, corresponding to different types of carbon atom bonds. The widest peak, centred at approximately 1350 $cm^{-1}$, corresponds to the $sp^3$ bond type. The 1600 $cm^{-1}$ peak corresponds to the $sp^2$ bond type.

The most important result is the existence of $sp^1$ hybridized carbon (1900-2200 $cm^{-1}$ peak), the proportion of which becomes dominant after high-temperature treatment of the fibres.

The results of electron spectroscopy for chemical analysis, presented in fig. 6, show that in the initial fibre

(spectrum 1) the content of carbon is 50%, chlorine 47% and oxygen 3%. After dehydrohalogenation (spectrum 2), the content of chlorine falls to 3%, and on a background of this, the proportion of carbon rises to 90%, and oxygen to 7%. In the spectrum recorded for the sample after high-temperature treatment (spectrum 3), traces of chlorine are absent, and the content of oxygen is 2%.

Thus, chemical analysis also confirms that chlorine is split off from PVDX fibre during its treatment, the main part by the dehydrohalogenation reaction, and the remainder during the subsequent heat treatment.

A study of the samples obtained in a transmission electron microscope in phase contrast mode showed that the material has a large quantity of micro- and nanopores. Average pore size is 50 nanometres. Such a structure is formed as a result of desorption in the process of burning off the volatile organic compounds present in the fibre after dehydrohalogenation.

Example 2.

Investigation of the emission properties of the carbon fibres produced.

An emitter was prepared from fibres obtained in accordance with example 1. The emitter and an anode were placed in a high-vacuum chamber in order to record the volt-ampere characteristic shown in fig. 7 (curve 1). The dependence obtained approximates to the theoretical Schottky relationship

$$I \sim \exp.(C\sqrt{E}) = \exp(e^{3/2}\sqrt{E}/kT),$$

where
E is electrical field strength,
e is the charge on an electron
T is the cathode temperature.

As is well known, electron emission via the Schottky mechanism (effect) occurs due to thermal excitation of electrons from the Fermi level over the potential barrier $\Phi - \Delta\Phi$ (fig. 8), where $\Phi$ is the work function of the material, $\Delta\Phi$ is the reduction in work function on application of an electrical field Ex. Since $\Delta\Phi$ is a function of voltage and increases as $\sqrt{E}$, the thermal current will increase with increase in E.

The Schottky mechanism applies when the electrical field exceeds a value of $10^4$ V/cm. In the experiments, the field strength did not exceed $1.5.10^5$ V/cm.

In known emitters made from carbon nanotubes (with the $sp^2$ type of carbon atom bond), the volt-ampere characteristic (it is shown for comparison in fig. 7, curve 2) of the emission proceeds via a different - the Fowler-Northeim - mechanism and is described by the relationship $I - E^2\exp.(-c/E)$ and commences from $E = 10^7$ V/cm, i.e. 2 orders of magnitude higher than for fibres produced in accordance with the present invention.

b) Manufacture of a film cathode

Example 3

A suspension, prepared from crushed fibres (threads) manufactured by the method of example 1, is applied to a metal plate. The suspension is prepared from a powder of crushed threads in a solution which contains a binding component (a solution of polymer, an aqueous solution of adhesive). After forming an even layer of suspension on the metal substrate, it is dried. In this process, the solvent is evaporated off and a strong film is obtained, consisting of short lengths of fibres. As a result, a flat cold cathode with unlimited area is obtained.

The cathode is placed in a vacuum of $10^{-6}$ torr. An accelerating grid of metal is placed at a distance of 1 mm from it. An accelerating voltage U is applied between the cathode and the anode, and cold emission of electrons into the vacuum is obtained.

Figure 9 shows the volt-ampere characteristic of a flat cold cathode prepared by such method. As can be seen, emission commences at a field strength of 2.4 V/$\mu$m ($2.4 \cdot 10^4$ V/cm) .

The mechanism of the emission is illustrated by fig. 10, where the volt-ampere characteristic is shown in ln(I) - $\sqrt{U}$ coordinates. As can be seen in this figure, the experimental curve is rectified in these coordinates, i.e. the emission current is proportional to $\exp.(C\sqrt{U})$, which corresponds to the theoretical Schottky model.

## Claims

1. Use of a carbon material based on linear-chain $sp^1$ carbon for the manufacture of cold cathodes.

2. Cold cathode manufactured from carbon material based on linear-chain $sp^1$ carbon.

3. Cold cathode according to Claim 2, manufactured from carbon fibre based on linear-chain $sp^1$ carbon.

4. Cold cathode according to Claim 2, made from carbon film based on linear-chain $sp^1$ carbon.

5. Cold cathode according to Claim 2, made from carbon film formed by application to a substrate of a suspension of carbon powder based on linear-chain $sp^1$-carbon.

6. Cold cathode according to Claim 5, **characterized in that** the substrate is made flexible, permitting transformation of the cathode during or on completion of its manufacture.

7. A cold cathode according to Claim 2, made from carbon film formed by deposition of carbon from a carbon plasma onto a substrate in the conditions of a vacuum.

8. Method for the production of carbon fibres having emission properties, which includes the following stages:

   (A) provision of polymeric fibres of polyvinylidenehalides and/or polyvinylhalides as the starting material;
   (B) performance of the reaction of dehydrohalogenation of said starting material with production in this process of a form of carbon with predominantly $sp^1$ bonds between the carbon atoms;
   (C) high-temperature treatment of the dehydrohalogenated carbon material produced in stage (B), for stacking the carbon chains into parallel bundles and imparting electrical conductivity to the material.

9. Method according to Claim 7, **characterized in that** treatment of the dehydrohalogenated material is performed at a temperature in the range from approximately 400°C to approximately 900°C and in a vacuum of roughly $10^{-4}$ Pa.

10. Cold cathode, made in the form of fibre, in which the fibre is manufactured by the method of Claim 8.

11. Electronic instrument, which contains a cold cathode made in accordance with any of Claims 2-7 and Claim 10.

12. Light source with a cold cathode made in accordance with Claims 3 or 10.

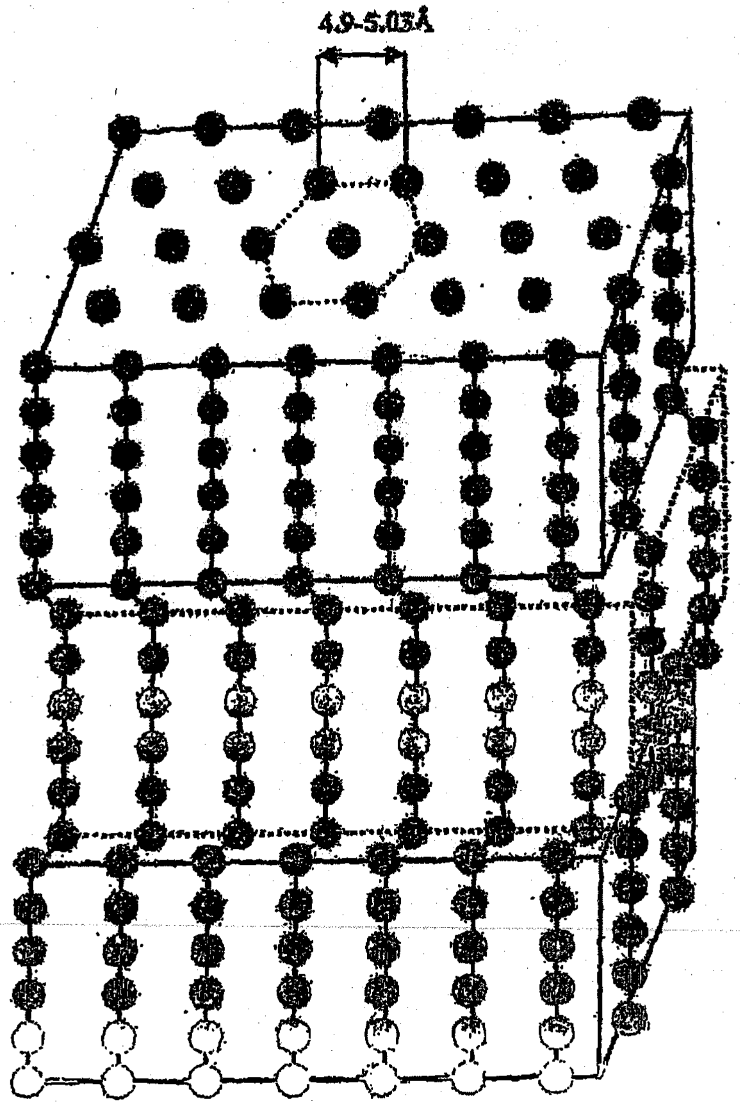


Fig. 1

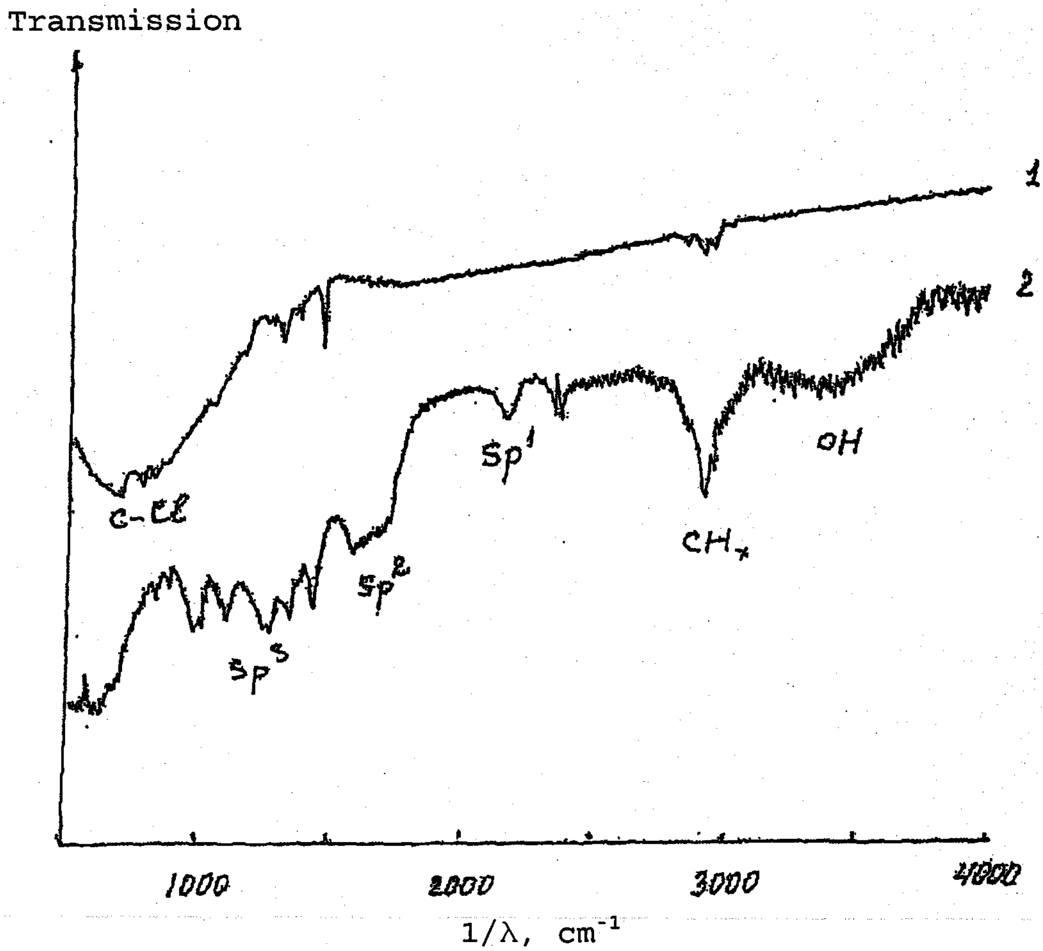
Transmission
1
2
c-Cl
sp^1
CH_x
OH
sp^2
sp^3
1000
2000
3000
4000
1/λ, cm^-1

Fig. 2

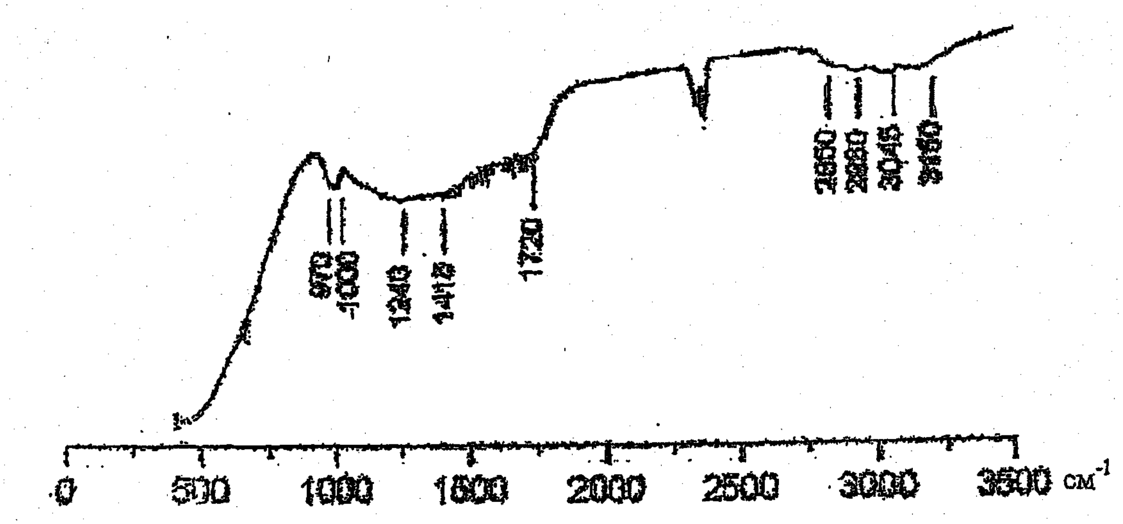
970
1000
1240
1410
1720
2850
2920
3045
3160
0
500
1000
1500
2000
2500
3000
3500 cm-1

Fig. 3

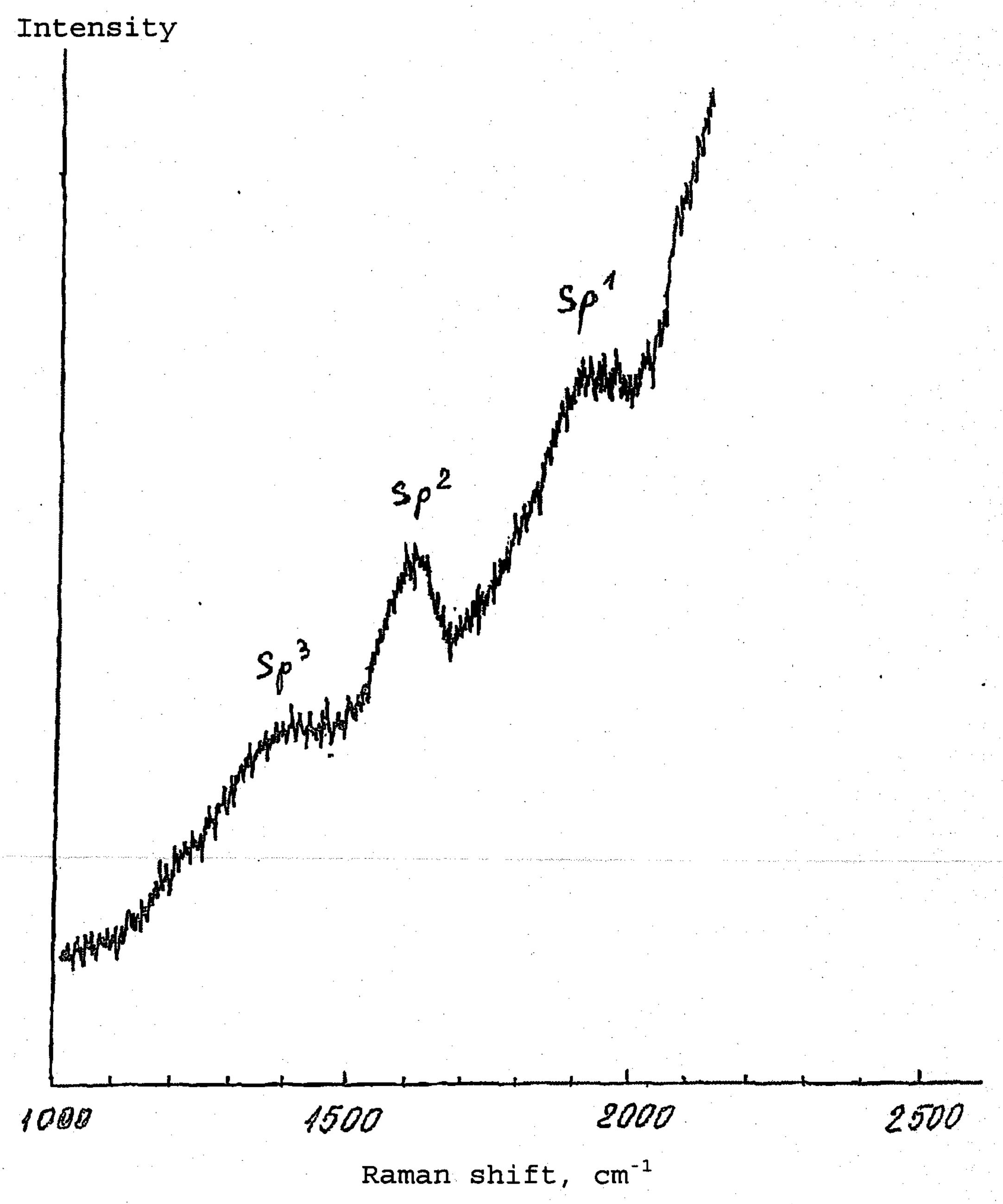


Fig. 4

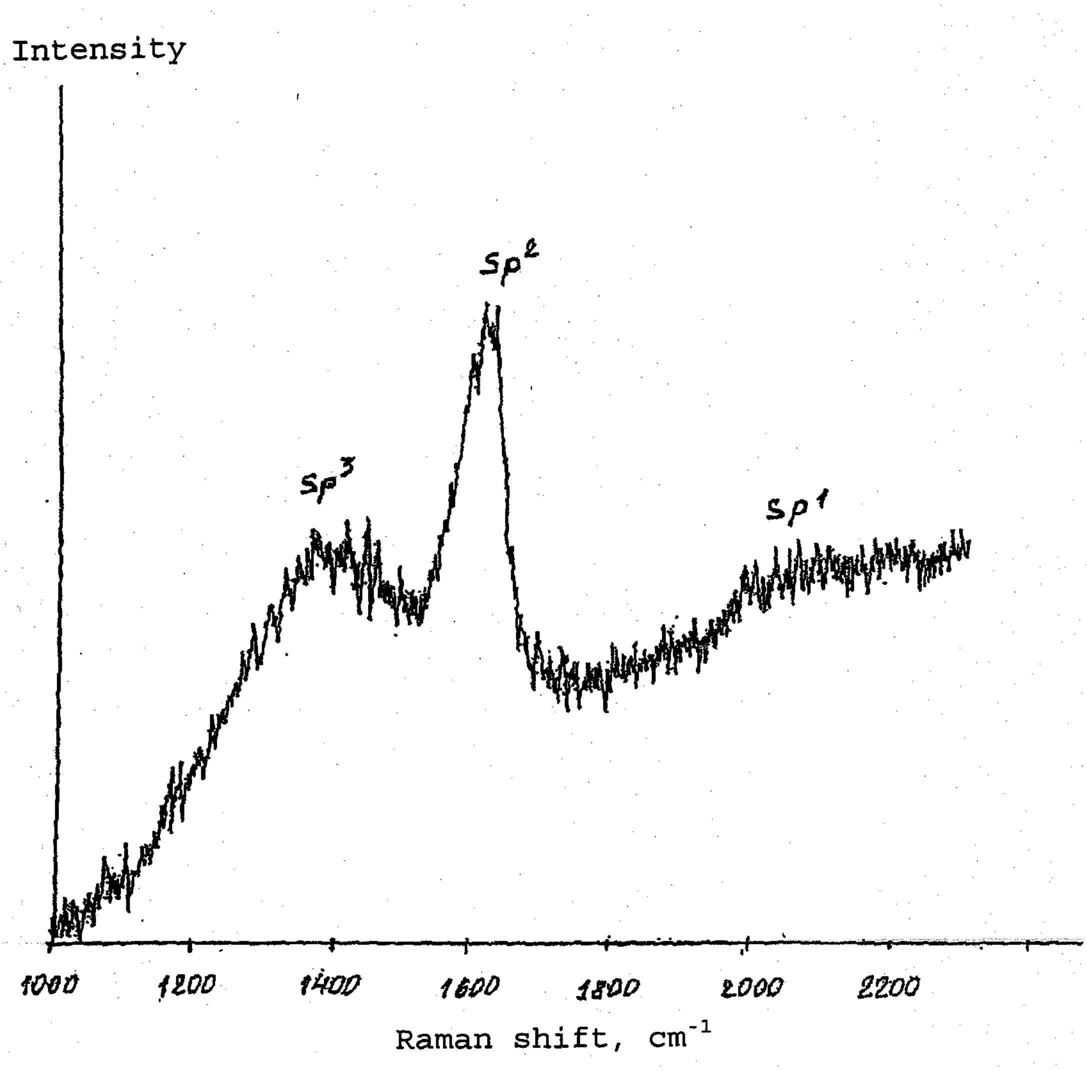
Intensity
sp²
sp³
sp¹
1000
1200
1400
1600
1800
2000
2200
Raman shift, cm⁻¹

Fig. 5

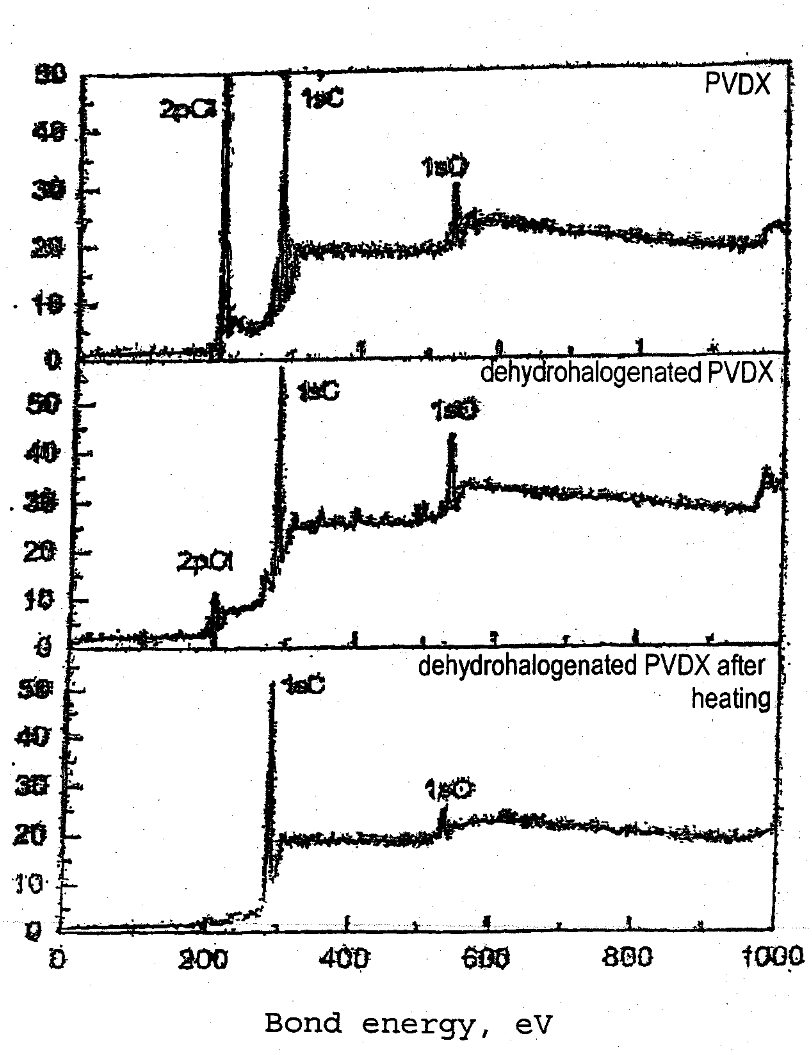
PVDX
2pCl
1sC
1sO
dehydrohalogenated PVDX
1sC
1sO
2pCl
dehydrohalogenated PVDX after heating
1sC
1sO
0
200
400
600
800
1000
Bond energy, eV

Fig. 6

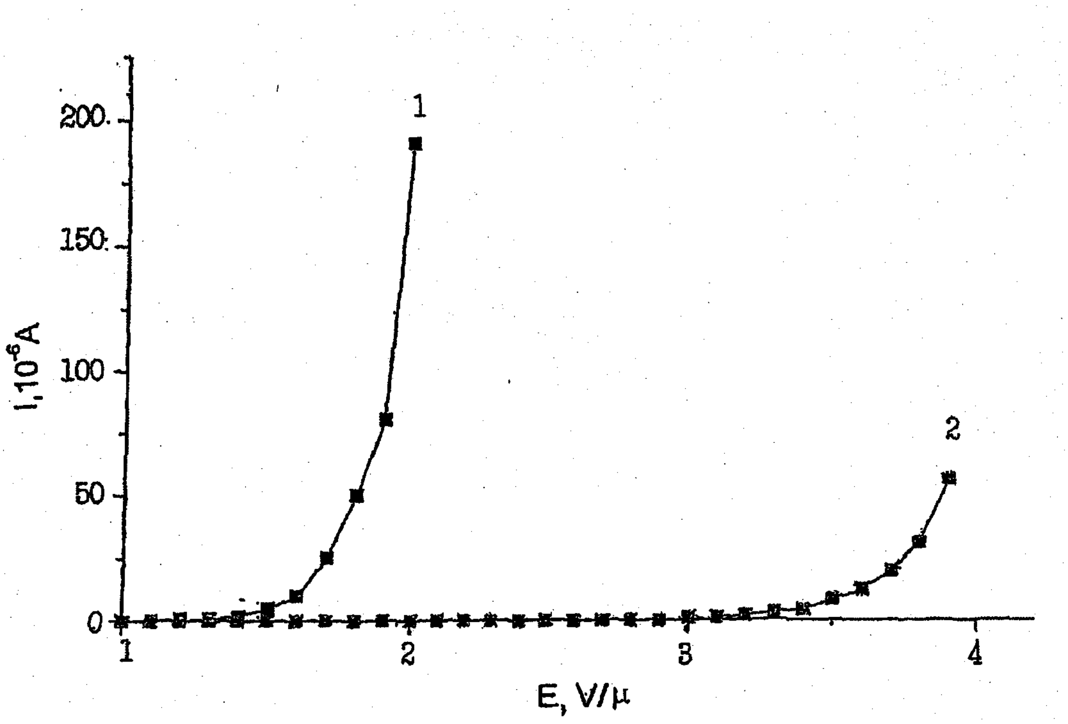


Fig. 7

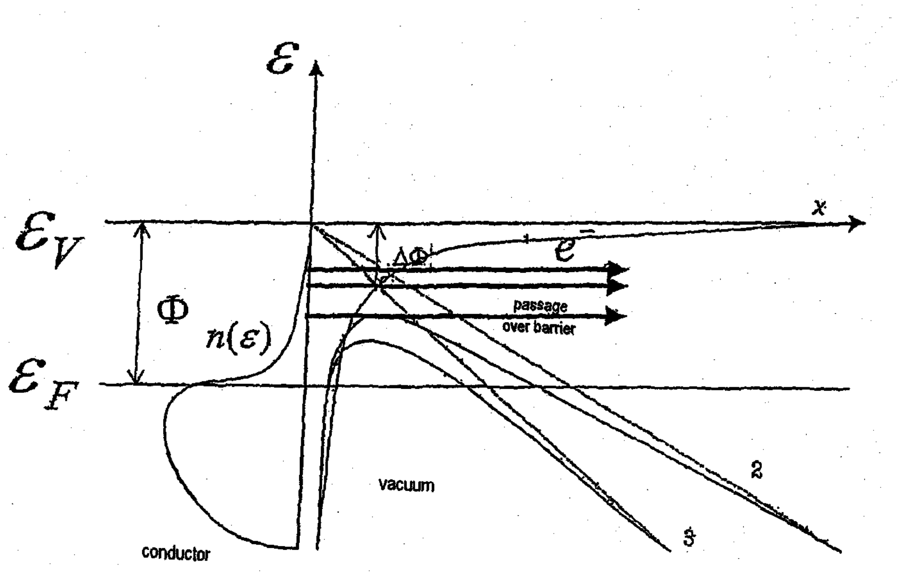
ε
x
$\varepsilon_V$
$\Phi$
$n(\varepsilon)$
$\varepsilon_F$
ΔΦ
$e^-$
passage over barrier
2
3
vacuum
conductor

Fig. 8

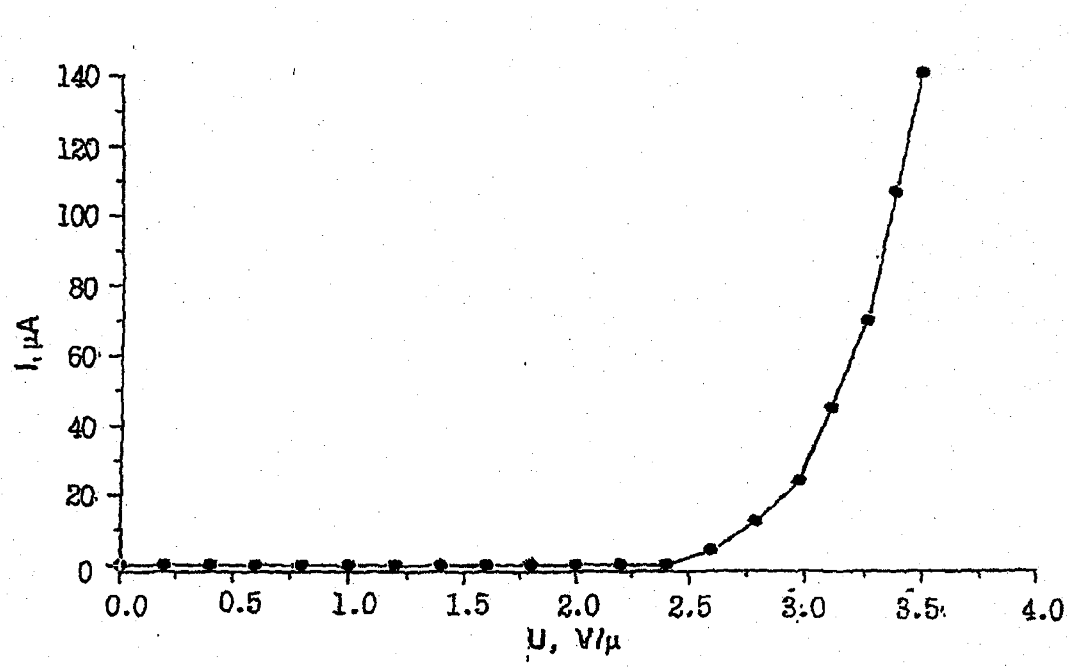


Fig. 9

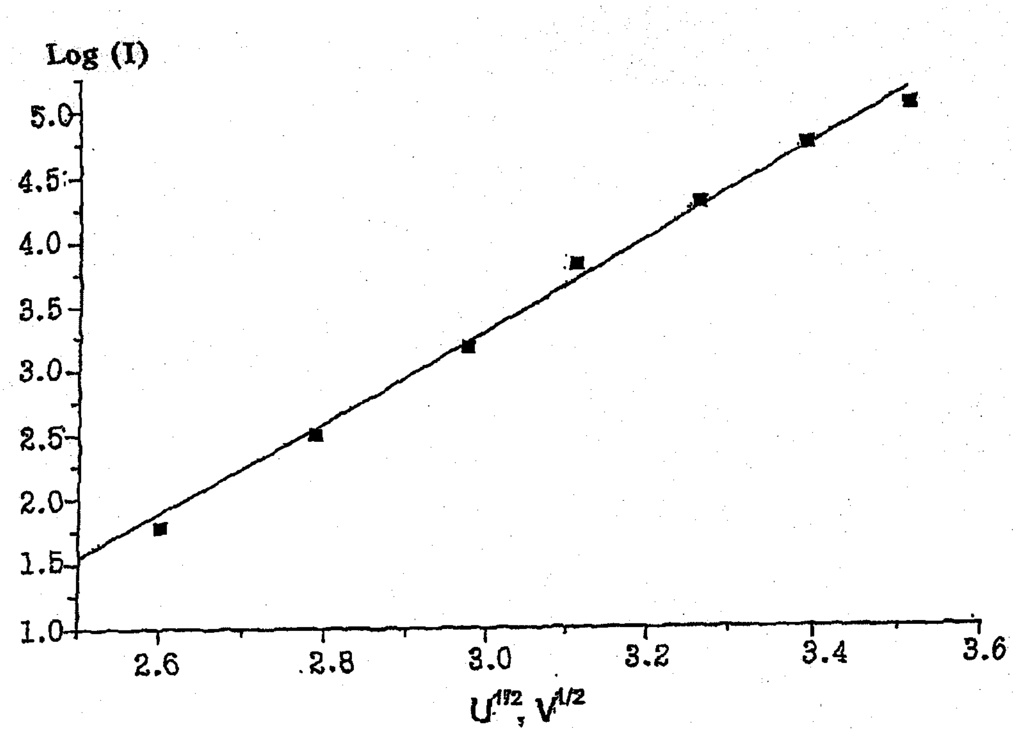


Fig. 10

## INTERNATIONAL SEARCH REPORT

International application No.
PCT/RU 2003/000303

A. CLASSIFICATION OF SUBJECT MATTER H01J 1/30, 9/12, 19/24

According to International Patent Classification (IPC) or to both national classification and IPC

B. FIELDS SEARCHED

Minimum documentation searched (classification system followed by classification symbols)

H01J 1/30, 1/02, 1/00, 9/00, 9/02, 9/12, 19/00, 19/12, 19/24

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | RU 94011577 A1 ( MOTOROLA, INC.) 10.12.1995, the claims | 1-12 |
| A | RU 2194328 C2 (OOO "VYSOKOE TEKHNOLOGII") 10.12.2002, the claims | 1-12 |
| A | RU 2159972 C1 (AKTSIONERNOE OBSCHESTVO ZAKRYTOGO TIPA "KARBID") 27.11.2000, the abstract | 1-12 |
| A | EP 1291889 A2 (CANON KABUSHIKI KAISHA) 12.03.2003, the claims | 1-12 |

☐ Further documents are listed in the continuation of Box C.   ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| (09.03.2004) | (18.03.2004) |
| Name and mailing address of the ISA/ **RU** Facsimile No. | Authorized officer Telephone No. |

Form PCT/ISA/210 (second sheet) (July 1992)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9725028 A
- WO 9725078 A
- US 6355350 B1
- US 6454797 B2


### Non-patent literature cited in the description


- **BACNER F. et al.** The carbon-fibre field emitter. *J. Phys D. Appl. Phys.,* 1974, vol. 7 (15), 2105-2115
- **BRAUN E. et al.** Carbon fibres as field emitter. *Vacuum,* 1975, vol. 25 (9/10), 425-426
- **CHUNG D.S. et al.** Field emission from well distributed Multiwall carbon nanotube films Techndiqest JVMC. 1999, 312-313
- **E.P. SHESHIN.** *The surface structure and autoemission properties of carbon materials,* 2001, 209-210